# EUROPEAN PATENT SPECIFICATION

(11) **EP 0 949 778 B1**
(45) Date of publication and mention of the grant of the patent: **14.12.2005**
(21) Application number: 99302619.4
(22) Date of filing: 01.04.1999
(51) Int. Cl.: H04L 1/00

(54) **Dummy bit elimination device and coding apparatus for FEC code word**
Dummy-Bit-Eliminierungsvorrichtung und Kodierungsanordnung für FEC-Kodewort
Dispositif d'élimination des bits fictifs et dispositif de codage des mots de code pour correction d'erreurs en avant

(30) Priority: 06.04.1998 JP 9327398
(43) Date of publication of application: 13.10.1999
(73) Proprietor: NEC CORPORATION, Tokyo (JP)
(72) Inventor: Fujisawa, Takanori, Minato-ku, Tokyo 108-01 (JP); Nomura, Kenichi, Minato-ku, Tokyo 108-01 (JP); Hara, Yasushi, Minato-ku, Tokyo 108-01 (JP); Yanagi, Norio, Minato-ku, Tokyo 108-01 (JP); Tanaka, Hiroaki, Minato-ku, Tokyo 108-01 (JP)
(74) Representative: Abnett, Richard Charles

(56) References cited:
- US-A- 3 700 820
- US-A- 4 755 993
- PETER SWEENEY: 'MODIFICATIONS TO BLOCK CODES' ERROR CONTROL CODING: AN INTRODUCTION 1991, PRENTICE HALL INTERNATIONAL, pages 36 - 39, XP000864253

## Description

The present invention relates to coding apparatus for generating FEC (Forward Error Correction) code words.

FEC coding apparatus is in practice normally based on code words which have a number of bytes which is a power of two. However, the actual code words will normally have less bytes than that. The surplus bytes are unused (or dummy) bytes.

Thus, for example, in a submarine cable system, a processing device for generating an FEC code, for example a Reed-Solomon code, based on an optical signal input, adds the unused bits to the FEC code to simplify the configuration thereof. Adding these bits according to the conventional method, however, increases the bit rate on the communication channel. The transmission loss is increased in accordance with the increased bit rate. Thus, for example, it has been necessary to compensate the loss by increasing the number of repeaters.

United States patent 4,755,993 describes an optical transmission system using forward error correction, in which to ameliorate the undesirable increase in the rate at which information must be transmitted resulting from the need to transmit error control code, at least some fixed positive stuffed information is replaced with error control information.

The present invention is defined in claim 1 below, to which reference may now be made. Advantageous features are set forth in the appendant claims.

The present invention will be more fully understood from the following detailed description with reference to the accompanying drawings in which:
Fig. 1 is a block diagram showing a coding apparatus configuration including an unused bit elimination device for the FEC code word embodying the present invention;
Fig. 2 is a diagram showing the output format of demultiplexer 2 in Fig. 1;
Fi. 3 is a diagram showing the output format of FEC coder 3 in Fig. 1;
Fig. 4 is a diagram showing the output format of multiplexer 5 in the case where the converter 4 shown in Fig. 1 is not present;
Fig. 5 is a diagram showing the output format of converter 4 in Fig. 1; and
Fig. 6 is a diagram showing the output format of multiplexer 5 in the case that there is provided a converter 4 as shown in Fig. 1.

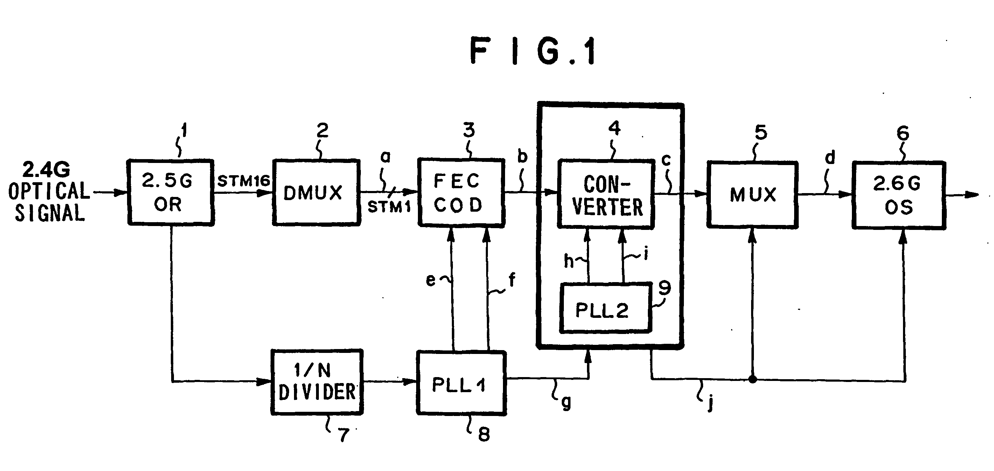

Fig. 1 is a block diagram showing a coding apparatus configuration including an unused bit elimination device according to an embodiment of the present invention. A 2.4G (Fig. 1) optical signal is fed into 2.5G optical receiver (2.5G OR) 1 and is output from 2.6G optical sender (2.6G OS) 6 as a 2.6G optical signal through demultiplexer (DMUX) 2, FEC coder (FEC COD) 3, converter 4 and multiplexer (MUX) 5. Clock signals, for activating the above circuits, generated at the 2.5G optical receiver 1 and divided at 1/N divider 7, are supplied to FEC coder 3, converter 4, multiplexer 5, and 2.6G optical sender 6, through phase locked loops 8 and 9 (PLL1 and PLL2).

The 2.4G optical signal is converted at the 2.5G optical receiver 1 into an STM16 signal in a form of an electric signal and is then fed to demultiplexer 2. Demultiplexer 2 separates the STM16 signal into STM1 signals a, of which there are 16 in number, and feeds them to FEC coder 3 in parallel.

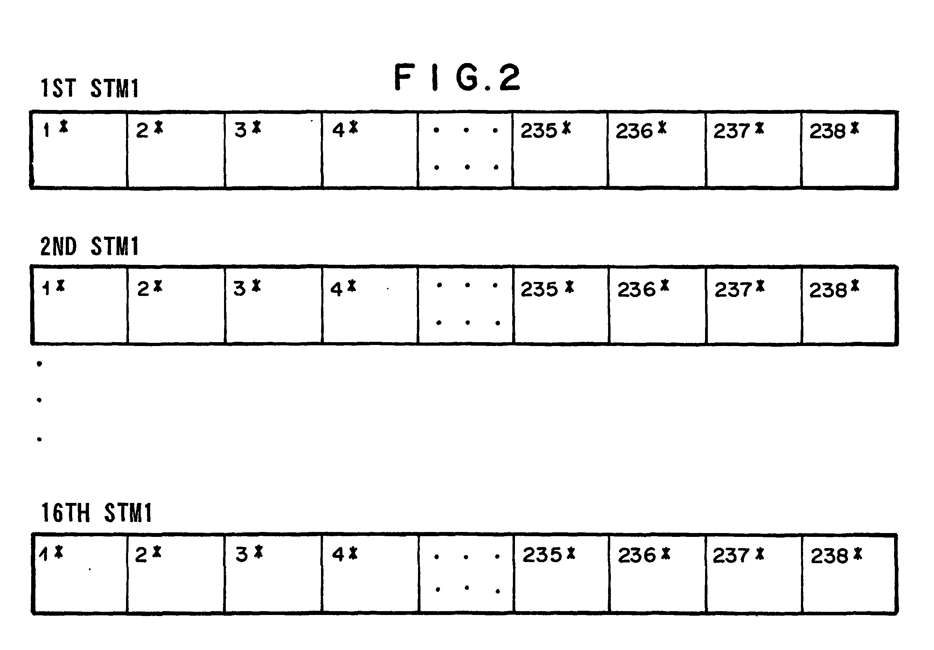

Fig. 2 shows the sixteen STM1 signals a, each of which consists of 238 bytes data.

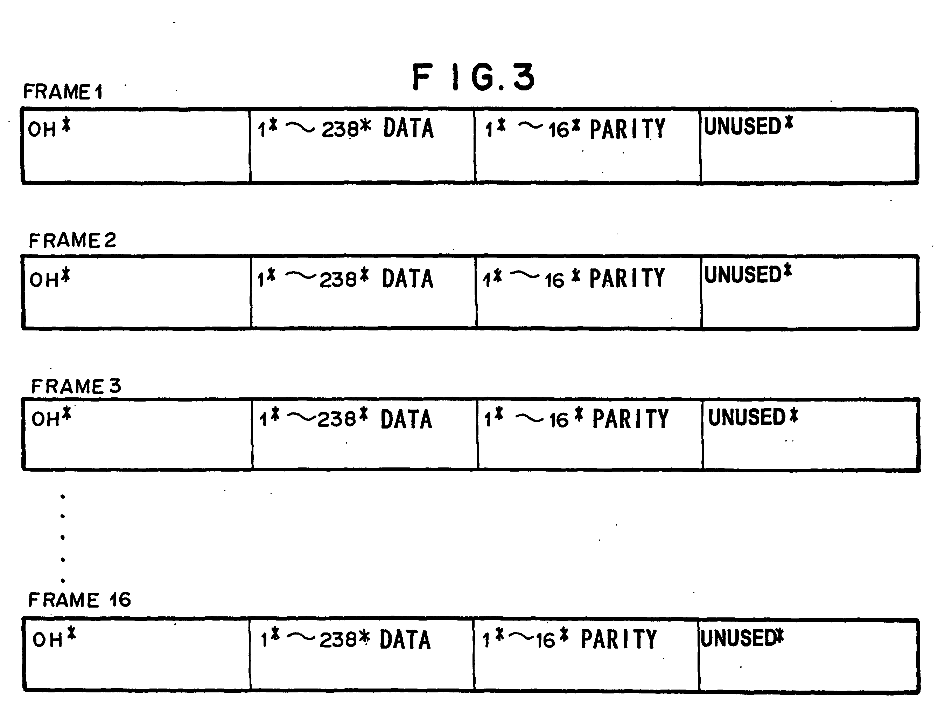

Each STM1 signal a is encoded at FEC coder 3 into an FEC COD output signal b which includes overhead bit OH, parity bits which form a part of the FEC code, and unused bits, sometime termed dummy bits, as shown in Fig. 3.

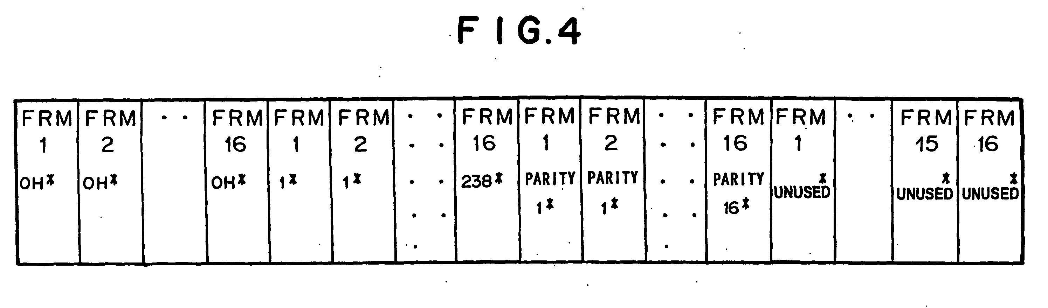

According to the conventional method, FEC COD output signal b is fed into multiplexer 5 and becomes a multiplexed signal in multiplexer 5. Fig. 4 shows the multiplexed signal generated at multiplexer 5. In this case, the bit rate on the communication channel may be increased due to the unused bits.

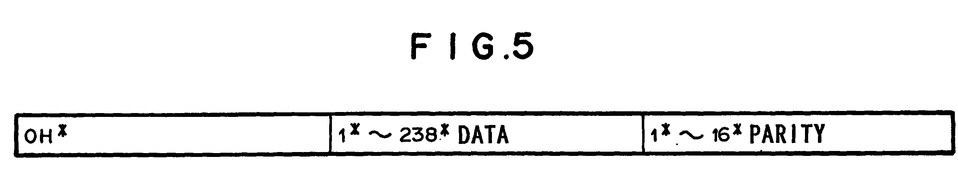

According to the embodiment illustrated, the FEC COD output signal b is fed into converter 4 for eliminating the unused bits. Converter 4 outputs a signal c which does not include the additional unused bits, as shown in Fig. 5. Signal c consists of overhead bits, data and parities but does not include the unused bits as shown in the figure.

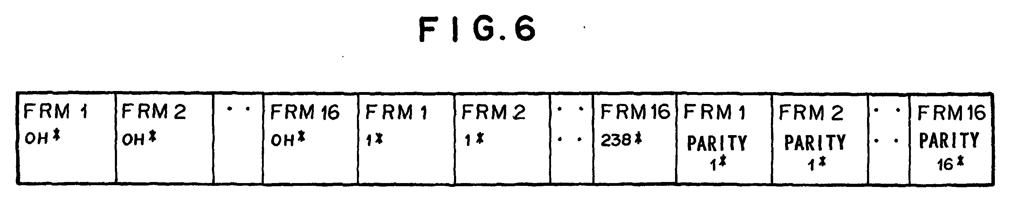

Signal c is processed at multiplexer 5 into multiplexed signal d shown in Fig. 6.

Multiplexed signal d is converted into the optical signal at 2.6G optical sender 6 and is sent out on the communication channel.

A 155 MHz clock signal extracted at the 2.5G optical receiver 1 is fed to 1/N divider 7 and is divided into a long cycle signal of 81KHz. The 81 KHz signal is supplied to PLL 8 (PLL1). PLL 8 generates write clock e and read clock f of 166 MHz for use in the FEC coder 3 for FEC process.

PLL 8 (PLL1) also sends a 2.6G multiplexing clock g to PLL 9 (PLL2). PLL 9 regenerates a 166 MHz clock from the 2.6G clock g and feeds write clock h and read clock i to converter 4 for eliminating the unused bits. The frequency of clock h is set to be lower than that of clock g.

PLL 9 (PLL2) also supplies multiplexing clock i which synchronizes with clock i to multiplexer 5 and 2.6G optical sender 6. Thus, the multiplexed signal from which the unused bits are eliminated may be generated.

Converter 4 and PLL 9 (PLL2) may be fabricated in one package IC. The IC may not be employed when a signal that includes the unused bits is transmitted. In this case, signal b is directly fed into multiplexer 5 and the 2.6G multiplexing clock g output from PLL 8 (PLL1) is directly fed to multiplexer 5 and the 2.6G optical sender 6. The configuration to transmit unused bits and another configuration not to transmit unused bits may be alternated with a switching means.

Thus, it is possible to eliminate the unused or dummy bits which are additionally output from the simplified FEC processor as explained above. Thus, the bit rate on the communication channel can be prevented from increasing. A signal having no unused bits is thus generated while using a simplified FEC processor. Thus, the circuit scale of the whole coding apparatus for generating the signal having no unused bits can be reduced. The converter and PLL2 may be simply inserted into the conventional FEC processor. Finally, it is possible to easily alternate the configuration to transmit unused bits and the configuration not to transmit unused bits.

## Claims

1. Coding apparatus for generating an FEC code word on the basis of input data, comprising coding means (3) for continuously outputting an FEC code word consisting of said input data and additional parities, and unused bits which are not included in said FEC code word;
**characterised by**:
unused bit eliminating means (4) for eliminating only said unused bits from a continuity consisting of said FEC code word and said unused dummy bits, so as to output only said FEC code word.

2. Coding apparatus as set forth in claim 1, further comprising:
means (1) for converting an optical signal into an electric signal data;
a demultiplexer (2) for demultiplexing said electric data;
wherein said coding means (3) and said unused bit eliminating means (4) operate for each output of said demultiplexer (2);
a multiplexer (5) for multiplexing outputs of said unused bit eliminating means (4); and
means (6) for converting the output of said multiplexer into an optical signal.

3. Coding apparatus according to claims 1 or 2, wherein said coding apparatus is incorporated in a submarine cable system.

## Patentansprüche

1. Kodierungsanordnung zum Erzeugen eines FEC-Kodeworts auf der Basis von Eingangsdaten, die eine Kodierungseinrichtung (3) zum fortlaufenden Ausgeben eines FEC-Kodeworts aufweist, das aus den Eingangsdaten und weiteren Paritäten und nicht verwendeten Bits besteht, welche nicht in dem FEC-Kodewort enthalten sind;
**gekennzeichnet durch**:
eine Eliminierungsvorrichtung (4) für nicht verwendete Bits, um nur die nicht verwendeten Bits aus einer Kontinuität zu eliminieren, die aus dem FEC-Kodewort und den nicht verwendeten Dummy-Bits besteht, um nur das FEC-Kodewort auszugeben.

2. Kodierungsanordnung nach Anspruch 1, die ferner aufweist:
eine Einrichtung (1) zum Umwandeln eines optischen Signals in elektrische Signaldaten;
einen Demultiplexer (2) zum Demultiplexen der elektrischen Daten,
wobei die Kodierungsanordnung (3) und die Eliminierungsvorrichtung (4) für nicht verwendete Bits für jede Ausgabe des Demultiplexers (2) arbeiten;
einen Multiplexer (5) zum Multiplexen von Ausgaben der Eliminierungsvorrichtung (4) für nicht verwendete Bits; und
eine Einrichtung (6) zum Umwandeln der Ausgabe des Multiplexers in ein optisches Signal.

3. Kodierungsanordnung nach Anspruch 1 oder 2, wobei die Kodierungsanordnung in ein Unterseekabelsystem eingebaut ist.

## Revendications

1. Dispositif de codage pour générer un mot de code FEC sur la base de données d'entrée, comprenant des moyens de codage (3) pour sortir en continu un mot de code FEC constitué par lesdites données d'entrée et des parités supplémentaires, et des bits inutilisés qui ne sont pas inclus dans ledit mot de code FEC ;
**caractérisé par** :
des moyens d'élimination des bits inutilisés (4) pour éliminer seulement lesdits bits inutilisés parmi une continuité constituée par ledit mot de code FEC et lesdits bits fictifs inutilisés, afin de sortir seulement ledit mot de code FEC.

2. Dispositif de codage selon la revendication 1, comprenant en outre :
des moyens (1) pour convertir un signal optique en des données de signal électrique ;
un démultiplexeur (2) pour démultiplexer lesdites données électriques ;
dans lequel lesdits moyens de codage (3) et lesdits moyens d'élimination des bits inutilisés (4) fonctionnent pour chaque sortie dudit démultiplexeur (2) ;
un multiplexeur (5) pour multiplexer des sorties desdits moyens d'élimination des bits inutilisés (4) ; et
des moyens (6) pour convertir la sortie dudit multiplexeur en un signal optique.

3. Dispositif de codage selon la revendication 1 ou 2, dans lequel ledit dispositif de codage est incorporé dans un système de câble sous-marin.
